# EUROPÄISCHE PATENTANMELDUNG

(11) **EP 1 587 270 A1**
(43) Veröffentlichungstag der Anmeldung: **19.10.2005**
(21) Anmeldenummer: 04008884.1
(22) Anmeldetag: 14.04.2004
(51) Int. Cl.: H04L 29/06, H04L 12/56

(54) **Individuelles Versenden von Nachrichten an Paketnetz-Teilnehmer**

(71) Anmelder: SIEMENS AKTIENGESELLSCHAFT, 80333 München (DE)
(72) Erfinder: Küchenhoff, Stefan ,Dr., 80797 München (DE)

(57) **Zusammenfassung**

Bisher ist es nicht möglich an einen Teilnehmer eines Paketnetzes (z.B. IP-Netz oder ATM Netz), der keine aktuell gültige Paketnetz-Adresse (z.B. IP Adresse) hat, eine Nachricht zu senden.

Die Erfindung löst dieses Problem mithilfe einer Topologiedatenbank.

## Beschreibung

### 1. Problem, das der Erfindung zugrunde liegt

Senden von Nachrichten an einen Teilnehmer, der an einem Paketnetz angeschlossen ist, der aber keine netzweit bekannte bzw. gültige Adresse (z.B. IP Adresse) besitzt.

### 2. Bisherige Lösung des genannten Problems

Bisher ist es nicht möglich an einen Teilnehmer eines Paket-netzes (z.B. IP-Netz oder ATM Netz), der keine aktuell gültige Paketnetz-Adresse (z.B. IP Adresse) hat, eine Nachricht (z.B. eine SMS, eine SIP INVITE, eine Meldung von einem Notfallzentrum oder eine Nachricht, die den Aufbau einer PPPoE Session teilnehmerseitig initiiert) zu senden. Der Teilnehmer kann die Nachricht nur zugesendet bekommen, wenn sich der Teilnehmer aktiv beim Netz registriert hat und er eine Paket-netz-Adresse erhalten hat, die den zentralen Netzelementen (z.B. Breitband Radius Access Server - BRAS, der eine Zuordnung zwischen Teilnehmer und Paketnetz-Adresse, z.B. IP-Adresse, hat) bekannt ist. Ist dies nicht der Fall, kann die Nachricht an ihn nicht über das Paketnetz zugestellt werden.

### 3. Erfindungsgemäße Lösung des genannten Problems

Im paketvermittelten Netz wird eine neue Instanz - im folgenden "Topologiedatenbank" genannt - eingeführt, die eine Datenbank und eine Kommunikationsschnittstelle enthält.

In der genannten Datenbank sind folgende Daten der Teilnehmer gespeichert: Für jeden Teilnehmer ist ein Eintrag vorhanden in dem beschrieben wird wie dieser gemäß der Topologie des Paketnetzes erreicht werden kann, d.h. wie an diesen anhand einer topologischen Wegbeschreibung Nachrichten gesendet werden können. Diese beschriebene Methode kann auch insbesondere in dem Fall verwendet werden, wenn der Teilnehmer keine aktuell gültige IP Adresse zugewiesen bekommen hat.
Beispiele für diese Topologiedaten pro Teilnehmer sind:
- Access Netz Identität und
- für ATM basierte Accessnetze: ATM PVC (VP/VC) oder
- für ethernetbasierte Accessnetze die MAC Adresse oder VLAN ID

Über die genannte Kommunikationsschnittstelle können andere Netzelemente (z.B. ein Softswitch oder ein Nachrichtenverteilzentrum) oder auch andere Teilnehmer die Topologiedaten pro Teilnehmer abfragen. Die erhaltenen Informationen können dann von dem abfragenden Netzelement bzw. dem sendenden Teilnehmer benützt werden, um die Nachricht auf die beschriebene Weise an den Teilnehmer zu senden.

(Anmerkung: Heutige Netze haben einen Layer 3 Anteil, hier ist die IP Adresse gültig und einen Layer 2 Anteil (z.B. ATM oder Ethernet), dort hat man eine Layer 2 Adresse (z.B. eine ATM-Adresse oder Ethernet-Adresse). Wesentlich ist, dass bei der IP Adressvergabe zugleich auch die Verknüpfung zwischen Layer 2 und Layer 3 mit hergestellt wird. Der entsprechende Eintrag erfolgt heute im BRAS bei der IP Adressvergabe - der BRAS ist die Grenze zwischen Layer 3 Netz und Layer 2 Netz. Das Layer 2 Netz bezeichnet man auch als Access Netz bzw. Zugangsnetz)

### Einschub "Alternativlösungen":

Bisher sind Alternativlösungen zur Erfindung mit vergleichbarem Funktionsumfang nicht bekannt. Als Alternative würde die Möglichkeit bestehen
- dem Teilnehmer eine feste IP Adresse zu geben. Damit wäre der Teilnehmer aber immer online und wertvolle dynamische Ressourcen müssten im Netz (BRAS und IP Adressen) vorgehalten werden.
- mit der Zusendung solange zu warten bis sich der Teilnehmer wieder am Netz angemeldet hat und somit eine IP Adresse erhalten hat. In diesem Fall könnte jedoch eine wichtige Anforderung, nämlich die Zusendung in Echtzeit an den Teilnehmer, nicht erfüllt werden.

### 4. Vorteile der erfindungsgemäßen Lösung

Nachrichten können sofort in Echtzeit an einen Teilnehmer gesendet werden - unabhängig davon ob er eine IP Adresse hat. Dies ist besonders wichtig
- bei Sprach- oder Videotelefonie, wenn sich der gerufene Teilnehmer nicht im Netz registriert hat.
- bei Kurznachrichten, da diese wie heute bei Mobilnetzen üblich sofort zugestellt werden
- in Notfällen, bei denen Teilnehmer schnell und zuverlässig informiert werden müssen

Der grundsätzliche Vorteil besteht darin, dass mit der beschriebenen Topologiedatenbank auch in Paketnetzen Teilnehmer jederzeit erreichbar sind. Dies ist heute bei leitungsvermittelnden Netzen durch z.B. den Klingelstrom bei analogen oder ISDN Teilnehmern bereits standardmäßig der Fall, aber in der derzeitigen Implementierung in Paketnetzen nicht möglich.

### 5. Zeichnerische Darstellung von Ausführungsbeispiel(en) der Erfindung anhand zweier Figuren

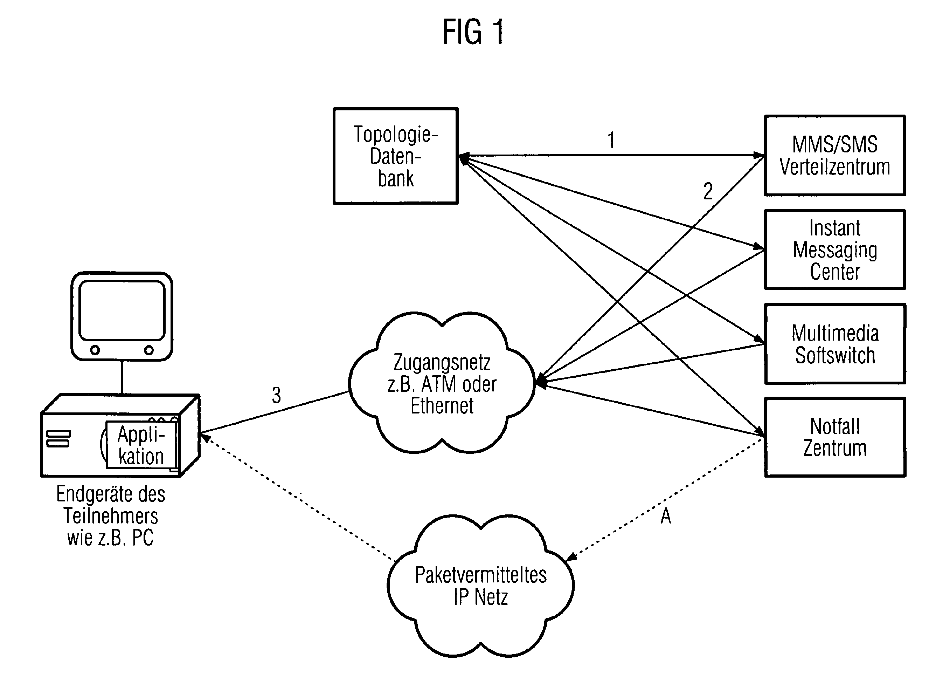

Figur 1 zeigt ein erstes Ausführungsbeispiel, das im folgenden näher erläutert wird.

Ein zentraler Kontrollserver im Netz erhält für einen Teilnehmer eine Nachricht, die an ihn weitergesendet werden soll. Als Beispiele für die Kontrollserver sind hier MMS/SMS-Verteilzentrum, Instant Messaging Center, Multimedia Softswitch oder ein Notfall Zentrum zu nennen. Der Kontrollserver stellt daraufhin bei der Topologiedatenbank eine Anfrage wie der Teilnehmer gemäß der vorliegenden Topologie erreicht werden kann (1). Die Topologiedatenbank antwortet mit einer Methode, zum Beispiel mit einer AccessnetzID und der Nummer eines ATM PVCs, der bei diesem Teilnehmer endet (im Fall von Ethernet ist die Antwort eine AccessnetzID und die MAC Adresse). Dann sendet der Kontrollserver die Nachricht an das betreffende Accessnetz.
Genauer gesagt generiert der Kontrollserver selbst eine Nachricht, die er an ein Gateway des Access Netzes adressiert und die neben dem Inhalt der für den Teilnehmer bestimmten Nachricht die ATM PVC Nummer enthält (2).
Im Accessnetz wird die von dem Kontrollserver generierte Nachricht nun entsprechend der dort vorhanden Routingmechanismen mithilfe der ATM PVC Nummer zum Teilnehmer bzw. genauer gesagt zum Teilnehmerendgerät gesendet (3). Im Teilnehmerendgerät wird sie an die geeignete Applikation weitergeleitet, die die Meldung bearbeiten und ggf. beantworten kann.

In einer Variante des ersten Ausführungsbeispiels überprüft der Kontrollserver, bevor er die genannte Anfrage an die genannte Topologiedatenbank stellt, ob der Teilnehmer aktuell eine gültige IP Adresse hat. Erst, wenn die Überprüfung ergibt, dass der Teilnehmer aktuell keine gültige IP Adresse hat und die Nachricht nicht direkt, d.h. nicht per Ende-zu-Ende-Kommunikation über das IP Netz weitergesendet werden kann (d.h. der gestrichelte Weg "A" über das IP Netz kann nicht benützt werden), fährt der Kontrollserver bei dieser Variante mit der genannten Anfrage an die Topologiedatenbank und der genannten Zustellung fort.

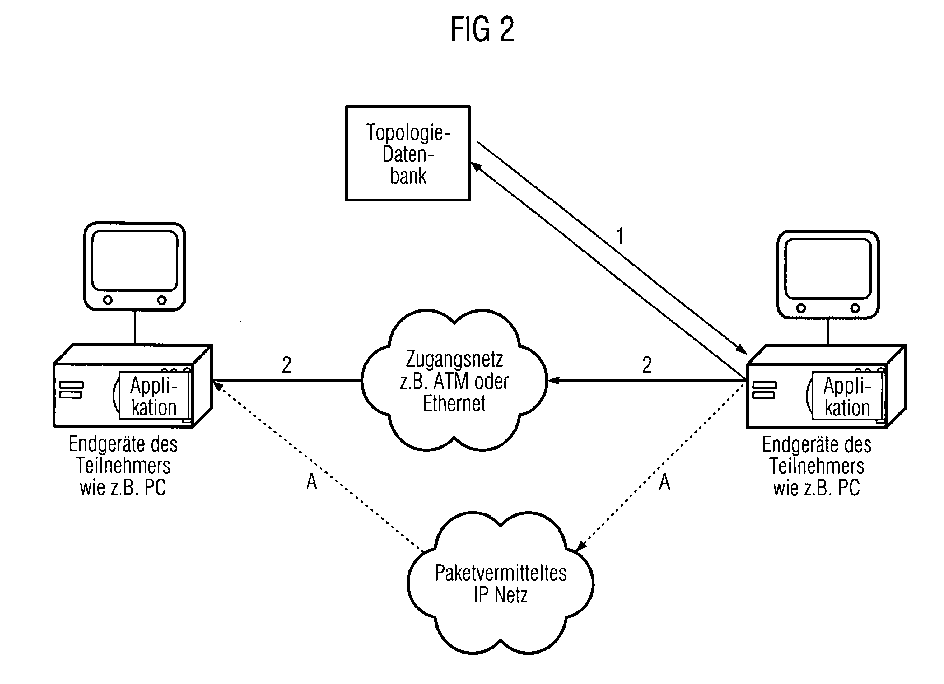

Figur 2 zeigt ein zweites Ausführungsbeispiel der Erfindung, das im folgenden näher erläutert wird.

Hier möchte ein Teilnehmer (sendender Teilnehmer) direkt eine Nachricht an einen anderen Teilnehmer (empfangender Teilnehmer) schicken (Peer to Peer Kommunikation).
Dazu wendet sich der sendende Teilnehmer an die Topologiedatenbank (1) und erhält von dort eine Beschreibung der Methode wie der Teilnehmer erreicht werden kann. Der Teilnehmer folgt der Beschreibung und sendet die Nachricht an das Zugangsnetz (2) und von dort wird die Nachricht über z.B. den ATM PVC zum empfangenen Teilnehmer gesendet.

In einer Variante des zweiten Ausführungsbeispiels überprüft der sendende Teilnehmer, bevor er die genannte Anfrage an die genannte Topologiedatenbank stellt, ob der Teilnehmer aktuell eine gültige IP Adresse hat.
Erst, wenn die genannte Überprüfung ergibt, dass der empfangende Teilnehmer keine gültige IP Adresse besitzt (und damit der direkte Weg, d.h. die Ende-zu-Ende-Kommunikation über das IP Netz - Weg A - nicht möglich ist), verfährt der sendende Teilnehmer nach dem obengenannten Verfahren, d.h. unter Zuhilfenahme der genannten Topologiedatenbank.

## Patentansprüche

1. Datenbank-System, mit
a) einer Datenbank, die Topologie-Daten der Teilnehmer eines Paketnetzes speichert, wobei die Topologie-Daten eines Teilnehmers beschreiben, wie ein Teilnehmer gemäß der To- pologie des Paketnetzes erreicht werden kann,
b) einer Kommunikationsschnittstelle, über die andere Netz- elemente oder andere Teilnehmer die Topologiedaten eines Teilnehmers abfragen können.

2. Datenbank-System nach Anspruch 1,
**dadurch gekennzeichnet, dass**
es sich bei dem Paketnetz um das Internet und bei der Paketnetz-Adresse des Teilnehmers um die IP-Adresse handelt.

3. Datenbank-System nach Anspruch 1 oder 2,
**dadurch gekennzeichnet, dass**
es sich bei den genannten Topologie-Daten eines Teilnehmers des Paketnetzes um die Access-Netz-Identität und zusätzlich entweder eine ATM-PVC oder eine MAC-Adresse oder eine VLAN-Identität handelt.

4. Kontrollserver eines Paketnetzes, der
a) eine für einen Teilnehmer des Paket-Netzes bestimmte Nach- richt empfängt,
b) bei einer Topologiedatenbank nachfragt, wie der Teilnehmer gemäß der Topologie des Paketnetzes erreicht werden kann,
c) sodann die Nachricht gemäß der in der Antwort enthaltenen topologischen Wegbeschreibung an den Teilnehmer sendet.

5. Kontrollserver nach Anspruch 4,
**dadurch gekennzeichnet, dass**
a) er vor dem Weitersenden der Nachricht überprüft, ob bezüg- lich des genannten Teilnehmers aktuell eine gültige Paket- netz-Adresse vorliegt,
b) er bei Vorliegen einer gültigen Adresse dem Teilnehmer die Nachricht über die gültige Paketnetz-Adresse zusendet.
c) er bei Nichtvorhandensein einer gültigen Paketnetz-Adresse bei der Topologiedatenbank die topologische Wegbeschrei- bung erfragt und die Nachricht gemäß dieser Wegbeschrei- bung zustellt.

6. Kontrollserver nach Anspruch 4 oder 5,
**dadurch gekennzeichnet, dass**
es sich bei dem Kontrollserver um ein MMS/SMS-Verteilzentrum oder ein Instant Messaging Center oder ein Multimedia Softswitch oder einen Voice Softswitch oder ein Notfall Zentrum handelt.

7. Kontrollserver nach einem der Ansprüche 4 bis 6,
**dadurch gekennzeichnet, dass**
es sich bei der genannten topologischen Wegbeschreibung um eine Access-Netz-Identität und zusätzlich entweder eine ATM-PVC oder eine MAC-Adresse oder eine VLAN-Identität handelt.

8. Kontrollserver nach einem der Ansprüche 4 bis 7,
**dadurch gekennzeichnet, dass**
es sich bei der genannten Nachricht um eine SMS, eine MMS, eine SIP INVITE oder eine Nachricht, die den Aufbau einer PPPoE Session teilnehmerseitig initiiert, handelt.

9. Endgerät eines Teilnehmers eines Paketnetzes, mit
a) einer Abfrageeinrichtung, über die es bei einer Topologie- datenbank abfrägt, wie ein Teilnehmer des Paketnetzes ge- mäß der Topologie des Paketnetzes erreicht werden kann,
b) einer Sendeeinrichtung, über die es an einen Teilnehmer des Paketnetzes eine Nachricht gemäß einer topologischen Wegbeschreibung senden kann.

10. Endgerät nach Anspruch 9,
**dadurch gekennzeichnet, dass**
es die genannte Abfrage nur durchführt, wenn bezüglich des genannten Teilnehmers aktuell keine gültige Paketnetz-Adresse vorliegt.

11. Endgerät nach Anspruch 9 oder 10,
**dadurch gekennzeichnet, dass**
es sich bei der genannten Nachricht um eine SMS, eine MMS, eine SIP INVITE oder eine Nachricht, die den Aufbau einer PPPoE Session teilnehmerseitig initiiert, handelt.

12. Verfahren zum Versenden von Nachrichten an einen Teilnehmer eines Paketnetzes, demgemäß
a) bei einer Topologiedatenbank nachgefragt wird, wie ein Teilnehmer gemäß der Topologie des Paketnetzes erreicht werden kann,
b) sodann die Nachricht gemäß einer topologischen Wegbe- schreibung an den Teilnehmer gesendet wird.

13. Verfahren nach Anspruch 12,
**dadurch gekennzeichnet, dass**
a) vor der genannten Anfrage bei der genannten Topologieda- tenbank überprüft wird, ob bezüglich des genannten Teil- nehmers aktuell eine gültige Paketnetz-Adresse vorliegt,
b) bei Vorliegen einer gültigen Adresse dem Teilnehmer die Nachricht über die gültige Paketnetz-Adresse zugesendet wird.

14. Verfahren nach Anspruch 12 oder 13,
**dadurch gekennzeichnet, dass**
es sich bei dem Paket-Netz um das Internet und bei der Paketnetz-Adresse des Teilnehmers um die IP-Adresse handelt.
